# FASCICULE DE BREVET EUROPEEN

(11) **EP 0 346 210 B1**
(45) Date de publication et mention de la délivrance du brevet: **27.01.1993**
(21) Numéro de dépôt: 89401554.4
(22) Date de dépôt: 06.06.1989
(51) Int. Cl.: B64C 1/06, B29D 31/00, B29C 67/14

(54) **Cadre en matériau composite notamment pour fuselage d'aéronef, et son procédé de fabrication**
Faserverstärktes Spant, insbesondere eines Luftfahrzeugrumpfs, und sein Herstellungsverfahren
Composite frame, in particular for an aircraft fuselage, and its manufacturing process

(30) Priorité: 08.06.1988 FR 8807638
(43) Date de publication de la demande: 13.12.1989
(73) Titulaire: AEROSPATIALE Société Nationale Industrielle, 75781 Paris Cédex 16 (FR)
(72) Inventeur: Barquet, Henri, F-13220 Chateauneuf Les Martigues (FR); Negroni, Pierre-Paul, F-13012 Marseille (FR); Plissonneau, Bernard, F-13100 Aix En Provence (FR)
(74) Mandataire: Mongrédien, André

(56) Documents cités:
- DE-A- 2 622 163
- GB-A- 2 134 059
- GB-A- 2 196 922
- US-A- 4 367 260

## Description

L'invention concerne un cadre en matériau composite destiné à renforcer une structure telle que le fuselage d'un aéronef et, notamment, d'un hélicoptère. L'invention concerne également un procédé de fabrication d'un tel cadre.

Dans les aéronefs à voilure tournante tels que les hélicoptères, ainsi que dans les aéronefs à voilure fixe, le fuselage, dont la structure est essentiellement une coque, peut avoir à supporter des efforts ponctuels nécessitant la présence d'un ou plusieurs cadres pour répartir ces efforts dans la structure travaillante. Dans le cas d'un hélicoptère, de tels cadres, notamment des cadres de renfort, sont habituellement utilisés pour fixer le ou les moteurs et les organes de transmission au rotor sur le dessus du fuselage. Dans les aéronefs à voilure fixe ou tournante, des cadres de renfort peuvent également être utilisés pour fixer les éléments résistants du train d'atterrissage.

Comme l'illustre notamment le document FR-A-2 539 701, il est connu de fabriquer le fuselage d'un hélicoptère, et notamment les cadres de renfort de ce fuselage, en un matériau composite constitué de fibres de carbone noyées dans une matrice de matière plastique.

Dans ce document, chacun des cadres comprend deux montants verticaux et deux traverses horizontales dont les extrémités sont fixées aux extrémités des montants verticaux. Les montants et les traverses comportent une enveloppe en matériau composite enfermant un matériau en nid d'abeilles. Plus précisément, l'enveloppe des montants verticaux présente une section transversale en forme de chapeau haut-de-forme fermée vers l'extérieur par une bande de matériau composite, alors que l'enveloppe des traverses horizontales est formée de deux profilés en U disposés dos-à-dos et reliés par deux bandes de matériau composite. L'assemblage entre les poutres latérales et les poutres horizontales est effectué par collage, en faisant pénétrer les extrémités des montants verticaux dans des parties évidées des extrémités des traverses horizontales.

Un cadre de renfort ainsi réalisé présente différents inconvénients. Ainsi, la conception décrite permet seulement de réaliser des cadres de forme approximativement rectangulaire et elle n'est pas applicable à des cadres de forme différente, par exemple circulaire ou polygonale. De plus, la segmentation en trois éléments de la partie supérieure en forme de portique du cadre entraîne des discontinuités dans la transmission à l'ensemble de la structure du cadre des efforts ponctuels appliqués sur celui-ci, par exemple aux emplacements servant à la fixation de la boîte de transmission principale ou des organes résistants du train d'atterrissage. En outre, le positionnement des ferrures supportant ces efforts ponctuels n'est pas assuré de façon satisfaisante. Enfin, les semelles des montants verticaux du cadre sont interrompues brutalement lorsque ces montants sont raccordés sur la poutre inférieure, ce qui accroît la discontinuité structurelle du cadre.

Par ailleurs, le document US-A-4 593 870 décrit une structure destinée à constituer la partie inférieure du fuselage d'un aéronef tel qu'un hélicoptère. Cette structure comprend deux âmes en matériau composite entre lesquelles est placé un matériau alvéolaire. Dans la partie inférieure de la structure, les âmes présentent des déformations constituant des amorces de plis de flambage, lorsque la structure du fuselage est sollicitée en compression dans une direction verticale sous l'effet d'un impact de cette structure contre le sol à forte vitesse.

L'invention a principalement pour objet un cadre de structure en matériau composite, notamment pour fuselage d'aéronef, conçu de façon à éviter les inconvénients du cadre de renfort décrit dans le document FR-A-2 539 701, ce cadre pouvant avoir une forme quelconque et permettant d'assurer une meilleure transmission dans l'âme et les semelles du cadre des efforts ponctuels exercés sur les ferrures fixées à ce cadre, ainsi qu'une mise en place plus aisée de ces ferrures.

Selon l'invention, ce résultat est obtenu au moyen d'un cadre pour coque travaillante, notamment pour fuselage d'aéronef, caractérisé par le fait qu'il a, au moins en partie une structure monolithique constituée par un profilé en matériau composite formé de fibres à haute résistance mécanique agglomérées par une résine synthétique durcie et présentant en section une semelle intérieure située, dans le plan du cadre, sur le côté intérieur du cadre, deux demi-semelles extérieures situées, dans le plan du cadre, sur le côté extérieur du cadre, et deux âmes reliant la semelle intérieure à chaque demi-semelle extérieure, la semelle intérieure ainsi que les demi-semelles extérieures étant constituées principalement de nappes de fibres unidirectionnelles s'étendant longitudinalement sans discontinuité à l'intérieur du profilé et les âmes du profilé étant formées par des tissus constitués de fibres multidirectionnelles et reliant la semelle intérieure à chaque demi-semelle extérieure.

Cette configuration permet notamment d'assurer une bonne stabilité au flambage du cadre dans les deux plans principaux, autorise sa fabrication par moulage et facilite la mise en place des ferrures d'introduction d'efforts et la fixation du revêtement travaillant de la coque.

Avantageusement, les deux âmes qui relient la semelle intérieure aux deux demi-semelles extérieures forment entre elles un angle aigu ouvert entre les deux demi-semelles extérieures et la semelle intérieure et les demi-semelles extérieures sont perpendiculaires à un plan de symétrie du cadre contenant la bissectrice dudit angle aigu.

La structure monolithique ainsi définie peut constituer une structure monobloc formant la totalité du cadre de renfort. Au contraire, lorsqu'il est nécessaire de donner à une partie inférieure du cadre des caractéristiques lui permettant d'assurer une absorption de l'énergie induite par l'impact du cadre contre le sol, seule une partie supérieure en forme de portique du cadre présente une structure monolithique.

Dans ce cas, la partie inférieure en forme de traverse comprend un panneau bordé sur toute sa périphérie de deux demi-semelles latérales.

De préférence, chacune des demi-semelles latérales contient principalement des fibres unidirectionnelles s'étendant sans discontinuité sur toute la périphérie du panneau formant la traverse inférieure.

Dans ce cas, le panneau comprend deux âmes parallèles formées de tissus de fibres multidirectionnelles et délimitant entre elles un espace rempli d'un matériau déformable tel qu'une mousse ou un matériau alvéolaire. Des déformations sont formées de préférence dans les parties inférieures des âmes du panneau, selon une direction longitudinale de la partie inférieure en forme de traverse, pour faciliter l'absorption de l'énergie en cas de choc.

Afin d'assurer l'assemblage des deux parties du cadre sans interrompre la continuité des demi-semelles constituant l'extérieur de ce dernier, la partie supérieure en forme de portique comprend des extrémités dépourvues de semelles fixées dans des évidements formés dans des extrémités du panneau formant la traverse inférieure et débouchant entre les demi-semelles latérales, de telle sorte que ces dernières soient situées dans le prolongement des demi-semelles extérieures de la partie supérieure en forme de portique.

L'invention a également pour objet un procédé de fabrication d'un cadre pour coque travaillante, notamment pour fuselage d'aéronef, caractérisé par le fait qu'on réalise au moins en partie le cadre sous forme d'une structure monolithique par :
- drapage de tissus unidirectionnels et multidirectionnels imprégnés de résine sur une forme délimitant la plus grande partie du contour, vers l'extérieur du cadre, d'un profilé présentant en section une semelle intérieure située, dans le plan du cadre, sur le côté intérieur du cadre, deux demi-semelles extérieures situées, dans le plan du cadre, sur le côté extérieur du cadre, et deux âmes reliant la semelle intérieure à chaque demi-semelle extérieure, ces âmes formant entre elles un angle aigu ouvert entre les demi-semelles extérieures, les tissus unidirectionnels formant la semelle intérieure et les demi-semelles extérieures et les tissus multidirectionnels reliant la semelle intérieure à chaque demi-semelle extérieure et formant les âmes du profilé ;
- fermeture d'un moule comportant ladite forme, des vessies gonflables et une contre-forme ;
- gonflage des vessies afin de compacter les tissus, et polymérisation à la chaleur de la résine imprégnant les tissus ;
- démoulage de ladite structure monolithique.

On décrira maintenant, à titre d'exemple nullement limitatif, deux modes de réalisation de l'invention en se référant aux dessins annexés dans lesquels :
- la figure 1 est une vue en perspective, avec arrachements, représentant un cadre de renfort monolithique monobloc réalisé conformément à un premier mode de réalisation de l'invention ;
- la figure 2 est une section transversale du cadre de la figure 1, la structure de la carlingue ainsi qu'une attache de fixation étant représentées en traits mixtes ;
- la figure 3 est une vue en perspective et en coupe transversale représentant un moule servant à la fabrication du cadre de renfort selon l'invention ;
- la figure 4 est une vue en perspective illustrant la mise en place des différentes couches de tissus constituant les âmes du profilé formant le cadre, dans les zones incurvées de ce dernier, à l'intérieur du moule de la figure 3 ;
- la figure 5 est une vue en perspective comparable à la figure 1, illustrant un deuxième mode de réalisation de l'invention, dans lequel le cadre de renfort comprend une partie supérieure monolithique en forme de portique et une partie inférieure en forme de traverse fabriquée séparément ;
- la figure 6 est une vue en perspective et en section transversale de la partie inférieure en forme de traverse du cadre de la figure 5 ;
- la figure 7 est une vue en perspective et en coupe transversale représentant un moule servant à la fabrication de la partie inférieure en forme de traverse représentée sur la figure 6 ;
- la figure 8 est une vue de face illustrant la liaison des extrémités de la partie supérieure en forme de portique sur les extrémités de la partie inférieure en forme de traverse ; et
- les figures 9A, 9B et 9C sont des sections selon les lignes A-A, B-B et C-C de la figure 8.

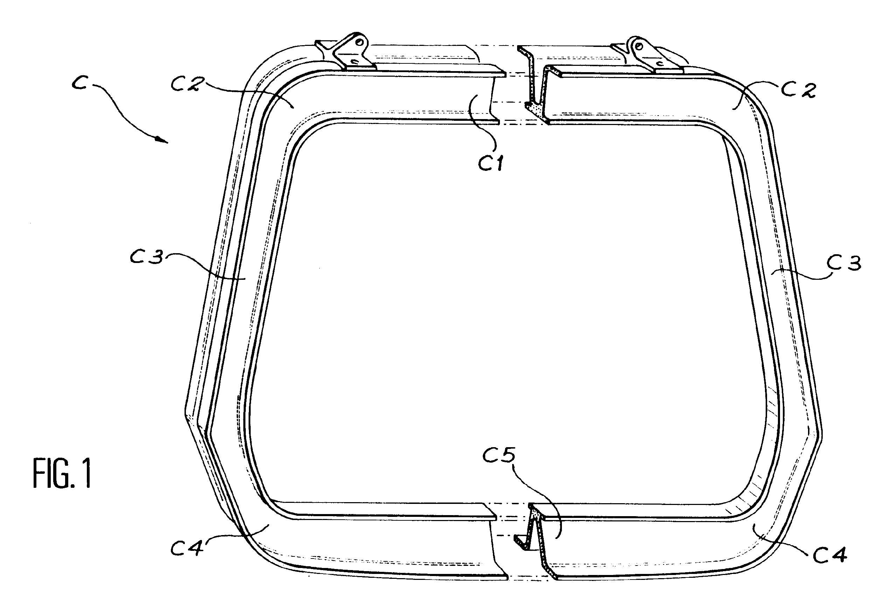

On a représenté sur la figure 1 un cadre C en matériau composite destiné à renforcer la coque constituant le fuselage d'un aéronef tel qu'un hélicoptère. Dans le mode de réalisation illustré, ce cadre a approximativement la forme d'un rectangle dont les angles sont arrondis. On comprendra cependant que la technique de fabrication de ce cadre selon l'invention permet de lui donner toute autre forme adaptée à l'application envisagée, telle qu'une forme circulaire ou polygonale.

Dans le mode de réalisation représenté sur la figure 1, le cadre C est réalisé en totalité sous une forme monobloc monolithique. Conformément à l'invention, cette structure monolithique est constituée par un profilé réalisé en un matériau composite. Le profilé constituant le cadre C comprend une portion supérieure horizontale C1 dont les extrémités sont prolongées par deux portions coudées approximativement à angle droit C2, orientées vers le bas, elles-mêmes prolongées par deux portions approximativement verticales C3, présentant une légère concavité vers l'intérieur du cadre et d'égales longueurs. Les extrémités inférieures des portions C3 sont prolongées par deux portions coudées approximativement à angle droit C4, elles-mêmes prolongées par une portion inférieure horizontale C5 fermant le cadre. Il est à noter que le cadre ainsi constitué présente un plan de symétrie vertical approximativement confondu avec le plan de la figure 1.

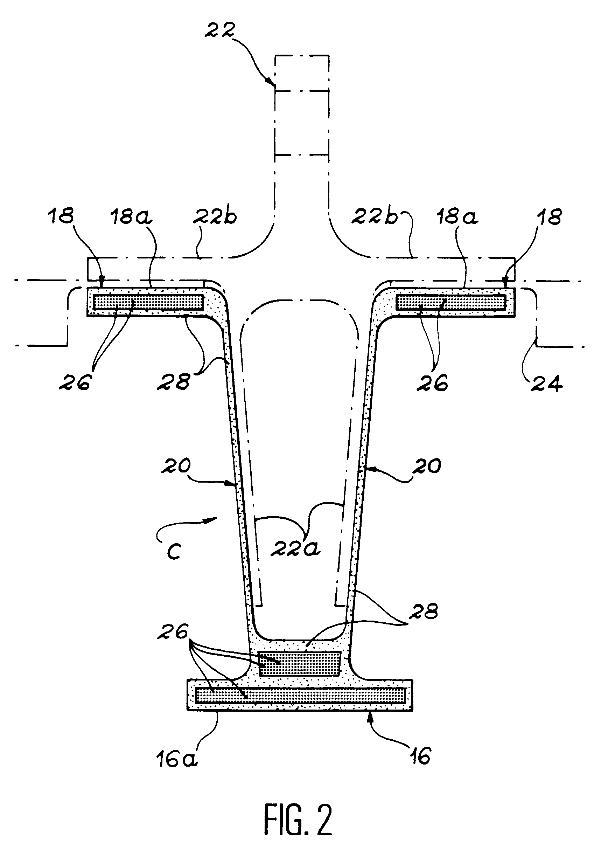

La structure du profilé constituant le cadre C va maintenant être décrite plus en détail en se référant à la figure 2, qui représente à plus grande échelle et de façon schématique une section transversale de ce profilé, dans la portion supérieure horizontale C1.

Comme le montre la section de la figure 2, le profilé constituant le cadre C présente une semelle intérieure 16, deux demi-semelles extérieures 18 et deux âmes 20 reliant la semelle intérieure 16 à chacune des demi-semelles extérieures 18.

De façon plus précise, la semelle intérieure 16 comporte une partie centrale située entre les âmes 20 et des ailes qui font saillie latéralement au-delà des âmes 20. De plus, la semelle 16 est délimitée intérieurement par une surface 16a perpendiculaire au plan de symétrie vertical du cadre défini précédemment. La surface 16a est donc plane dans les portions C1 et C5 du cadre.

Les âmes 20 sont orientées vers l'extérieur à partir de la semelle intérieure 16 et elles s'éloignent toutes deux progressivement du plan de symétrie vertical du cadre, selon deux directions symétriques par rapport à ce plan et délimitant entre elles un angle aigu très petit, ouvert vers l'extérieur du cadre entre les deux demi-semelles extérieures 18. Ainsi, la bissectrice de l'angle formé par les âmes 20 est contenue dans le plan de symétrie du cadre.

Les demi-semelles extérieures 18 sont disposées dans le prolongement de chacune des âmes 20 et orientées selon une direction perpendiculaire au plan de symétrie vertical du cadre, en éloignement de ce plan. Les demi-semelles 18 sont délimitées vers l'extérieur du cadre par des surfaces 18a perpendiculaires au plan de symétrie vertical du cadre et situées dans le prolongement l'une de l'autre. Ainsi, dans les portions rectilignes C1 et C5 du cadre, les surfaces extérieures 18a sont des surfaces planes.

La section du profilé constituant le cadre C est uniforme sur toute la périphérie de ce dernier. Cependant, les longueurs des âmes 20 peuvent être différentes entre les différentes portions C1 à C5. Ainsi, comme le montre la figure 1, la longueur des âmes 20 peut prendre sa plus grande valeur dans la portion inférieure C5, sa plus petite valeur dans les portions C3, et une valeur intermédiaire dans sa partie supérieure C1. Dans ce cas, le changement de longueur des âmes s'effectue progressivement dans les portions courbes C2 et C4. En revanche, les dimensions de la semelle intérieure 16 et des demi-semelles extérieures 18 sont les mêmes sur toute la périphérie du cadre.

La section particulière du profilé constituant le cadre monobloc monolithique de la figure 1 permet d'assurer une bonne stabilité au flambage de la structure ainsi constituée.

De plus, comme on l'a représenté en traits mixtes sur la figure 2, cette section permet une mise en place et un positionnement aisés de ferrures 22 servant notamment à la fixation de la boîte de transmission principale, lorsque le cadre équipe un hélicoptère. En effet, les ferrures 22, généralement métalliques, comportent alors une partie 22a complémentaire de l'évidement formé entre les âmes 20 et dont la mise en place dans cet évidement assure immédiatement un positionnement correct de la ferrure dans le plan de symétrie vertical du cadre.

Les ferrures de fixation 22 comportent de plus et de façon connue deux ailes 22b qui viennent s'appliquer sur les faces extérieures 18a des demi-semelles extérieures 18. La fixation des ferrures est assurée par tout moyen approprié tel que des boulons ou des rivets traversant à la fois les ailes 22b des ferrures et les demi-semelles extérieures 18 du profilé constituant le cadre.

Comme on l'a également représenté en traits mixtes sur la figure 2, les demi-semelles extérieures 18 du profilé constituant le cadre C servent aussi à la fixation du revêtement travaillant de la structure-coque 24 de l'aéronef,généralement réalisée elle aussi en matériau composite. A cet effet, la structure 24 présente à l'emplacement du cadre C des parties de moindre épaisseur qui viennent s'appliquer sur les surfaces extérieures 18a des demi-semelles extérieures 18, la fixation de la structure 24 sur ces dernières étant assurée par tout moyen approprié et notamment par collage et par rivetage.

Comme on l'a déjà mentionné, dans le mode de réalisation de la figure 1, le cadre C est réalisé sous forme d'une structure monobloc monolithique en matériau composite. Plus précisément, la semelle intérieure 16 ainsi que les deux demi-semelles extérieures 18 sont formées principalement de fibres unidirectionnelles 26 par exemple sous forme de rubans ou de bandes de tissus noyées dans une matrice de résine et s'étendant longitudinalement sans discontinuité à l'intérieur du profilé constituant le cadre. La semelle intérieure 16 comprend ainsi un premier noyau de fibres unidirectionnelles 26 s'étendant sur toute la largeur de la semelle, à proximité de la surface 16a, et un deuxième noyau de fibres 26 s'étendant entre les âmes 20, à la base de ces dernières. De même, chaque demi-semelle extérieure 18 comprend un noyau de fibres unidirectionnelles 16 s'étendant sur toute la largeur de la demi-semelle.

Le reste du profilé constituant le cadre C, c'est-à-dire principalement les âmes 20 et les parties de la semelle 16 et des demi-semelles 18 entourant les noyaux de fibres unidirectionnelles 26, est constitué de tissus de fibres bidirectionnelles 28 noyées dans une matrice de résine.

La nature des fibres unidirectionnelles 26 et des fibres constituant les tissus 28, ainsi que la nature de la résine dans laquelle sont noyées ces fibres sont choisies selon l'application envisagée, parmi les fibres et les résines utilisées habituellement dans le domaine des matériaux composites. Ainsi, les fibres peuvent être des fibres de carbone et la résine une résine thermodurcissable telle qu'une résine phénolique ou de type époxy.

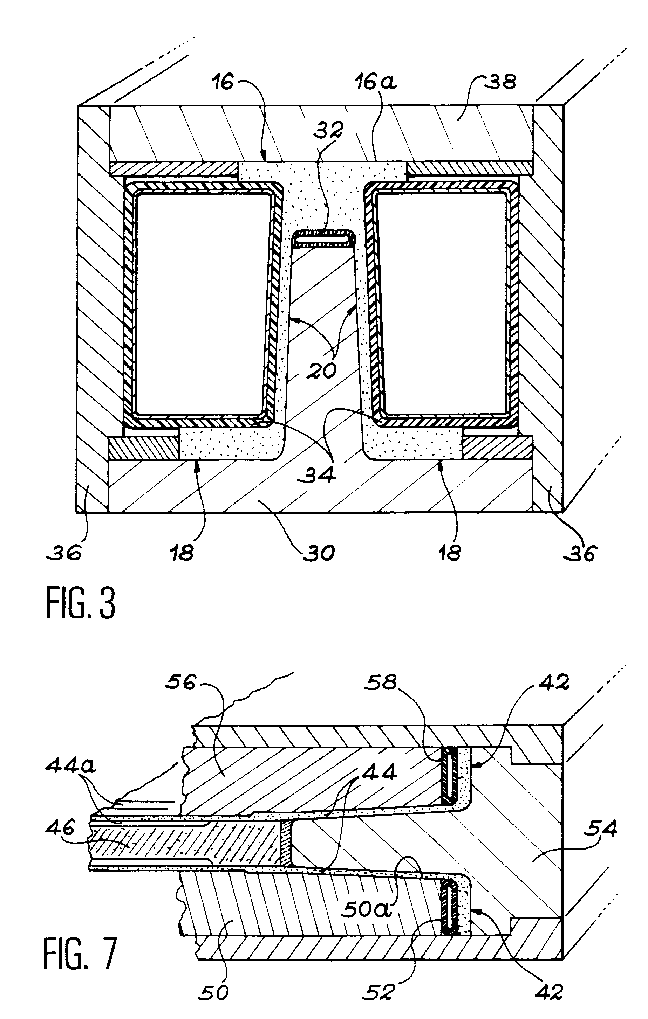

Le cadre monobloc monolithique C qui vient d'être décrit en se référant aux figures 1 et 2, est fabriqué dans un moule illustré par la figure 3, ce moule étant conçu de façon à permettre le compactage des tissus imprégnés de résine, lors du cycle de polymérisation de cette dernière à la chaleur.

Le moule représenté sur la figure 3 comprend tout d'abord une forme 30 dont la surface 30a tournée vers l'intérieur du moule a une forme complémentaire de la forme extérieure du cadre C à fabriquer. Le moule étant ouvert, on drape sur la surface 30a de la forme 30 les tissus bidirectionnels 28 et les fibres unidirectionnelles 26 préimprégnées de résine. Cette opération de drapage, habituelle dans la fabrication des matériaux composites, est généralement effectuée manuellement.

Dans le cas présent, pour faciliter leur mise en place, les fibres unidirectionnelles 26 imprégnées de résine sont placées sur un film support qui permet de les manipuler comme un tissu, tout en n'ayant aucune fonction mécanique lorsque la fabrication est terminée. Les fibres unidirectionnelles 26 peuvent ainsi être drapées comme des tissus en couches successives, pour former les noyaux de la semelle intérieure 16 et des demi-semelles extérieures 18. Ce drapage est effectué sur la forme 30 dans le sens de la longueur du profilé constituant le cadre C, sans coupure ni discontinuité. Cette caractéristique est rendue possible par le fait que la semelle 16 ainsi que les demi-semelles 18 sont orientées perpendiculairement au plan de symétrie vertical du cadre et présentent une section uniforme.

Le drapage des tissus bidirectionnels 28 imprégnés de résine est également effectué dans le sens de la longueur du profilé constituant le cadre C. Le nombre de couches de tissus constituant les âmes 20 ainsi que le nombre de couches de fibres unidirectionnelles 26 sont déterminés afin de donner au profilé les caractéristiques de résistance mécanique souhaitées.

Les tissus bidirectionnels constituant notamment les âmes 20 du profilé peuvent être drapés à partir de plusieurs débits de tissus, selon les disponibilités industrielles. Dans ce cas, la continuité de la structure est assurée par un recouvrement des tissus. Pour éviter une variation locale importante de l'épaisseur, les recouvrements sont décalés les uns par rapport aux autres.

Etant donné que les tissus bidirectionnels qui forment les âmes 20 assurent la liaison entre la semelle intérieure 16 et les demi-semelles extérieures 18, les bords latéraux de ces tissus sont nécessairement repliés sur les parties de la forme 30 correspondant à la semelle intérieure et aux demi-semelles extérieures.

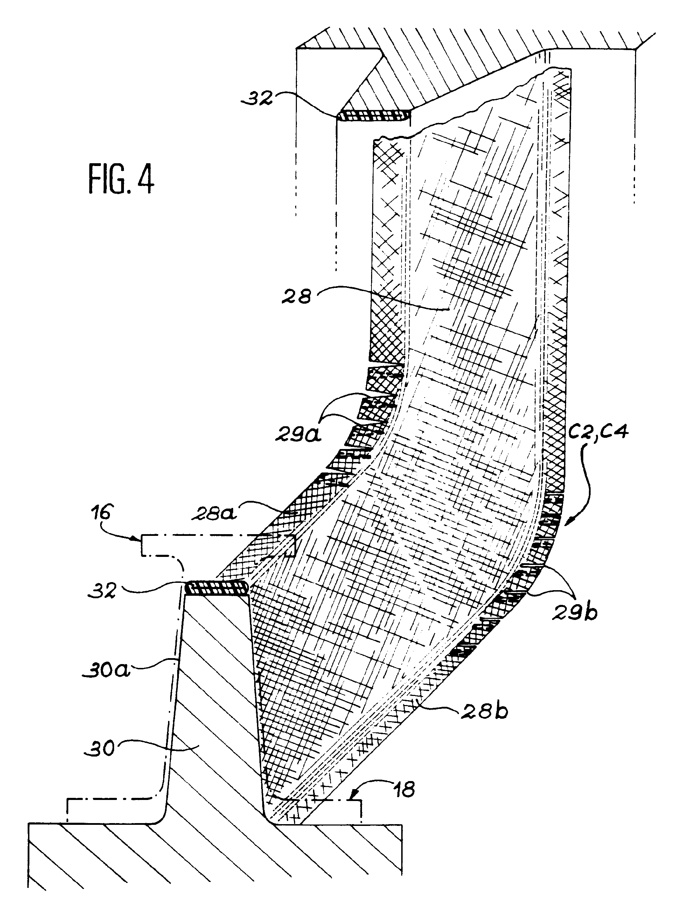

Comme l'illustre la figure 4, dans les portions coudées C2 et C4 du cadre C, la longueur du bord 28a de chaque tissu 28 replié vers la semelle intérieure 16 est inférieure à la longueur de tissu réellement nécessaire. Par conséquent, des entailles divergentes 29a sont pratiquées dans le bord 28a du tissus replié sur les parties de la forme 30 correspondant a ces portions coudées C2 et C4.

Au contraire, dans les portions coudées C2 et C4, la longueur du bord 28b de chaque tissu 8 replié vers la demi-semelle extérieure 18 est supérieure à la longueur de tissu réellement nécessaire. Des entailles 29b sont donc pratiquées dans le bord 28b du tissu replié sur les parties de la forme 30 correspondant a ces portions coudées C2 et C4, et les suppléments de tissu sont enlevés.

Comme l'illustre également la figure 4, les entailles 29a, et surtout 29b, sont pratiquées de façon décalée entre chaque couche de tissus 28, de façon qu'il n'y ait pas chevauchement des entailles lors de l'empilage.

En se reportant à la figure 3, on voit qu'avant de commencer le drapage des tissus de fibres bidirectionnelles 28 et des fibres unidirectionnelles 26 sur la forme 30, on place sur celle-ci, dans sa partie centrale située entre les âmes 20 et correspondant à la semelle intérieure 16, une vessie gonflable 32 initialement dégonflée.

Lorsque le drapage est terminé, on place deux vessies à armature 34 de part et d'autre des âmes 20, chacune des vessies 34 étant en outre en appui sur la demi-semelle extérieure 18 correspondante et sur l'aile en saillie de la semelle intérieure 16. Ces vessies 34 sont également dégonflées lors de leur mise en place, mais leur armature leur permet de maintenir en place les différentes couches de tissus avant leur gonflage.

Le moule est ensuite fermé par la mise en place d'une contre-forme constituée de deux flasques latéraux 36 qui sont fixés sur les bords extérieurs de la forme 30 et sont en appui sur les faces extérieures des vessies à armature 34, et par la mise en place d'une pièce périphérique intérieure 38, en plusieurs parties, fixée sur les pièces 36 et qui vient en appui sur la surface 16a de la semelle intérieure 16.

Les vessies 32 et 34 sont ensuite mises en pression afin de compacter les différentes couches des tissus préimprégnés de résine contenues dans le moule et la polymérisation à la chaleur de la résine est réalisée de façon classique.

A la fin de la polymérisation, les vessies sont dégonflées et le moule est ouvert afin d'en extraire le cadre monobloc monolithique C représenté sur la figure 1.

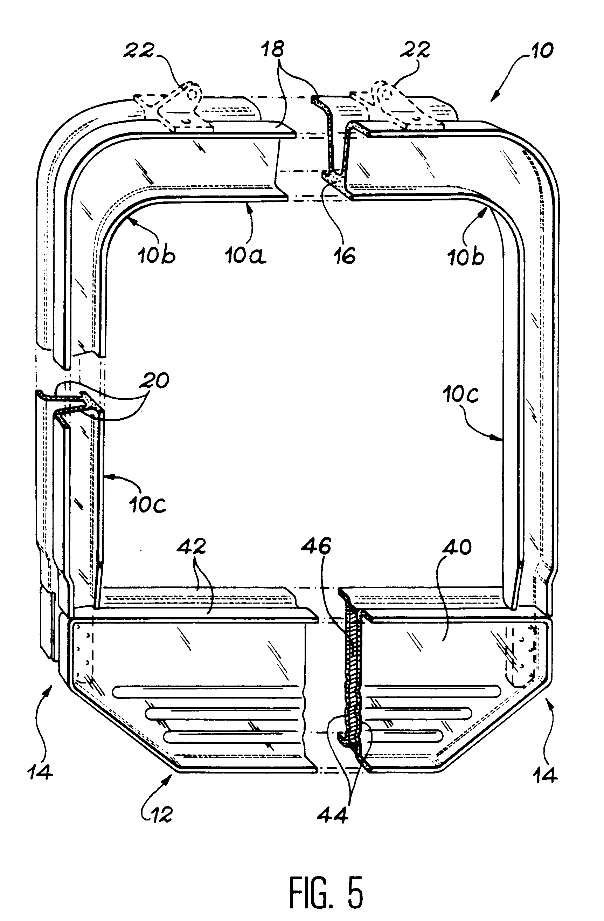

Dans un deuxième mode de réalisation de l'invention qui va maintenant être décrit en se référant à la figure 5, au lieu d'être réalisé totalement sous la forme d'une structure monobloc monolithique, le cadre de renfort selon l'invention est formé de deux parties distinctes, réalisées séparément, puis assemblées par des moyens appropriés.

De façon plus précise, le cadre de renfort est constitué dans ce cas par une partie supérieure 10 en forme de portique ou de cintré et par une partie inférieure 12 en forme de traverse, les extrémités adjacentes de ces deux parties étant reliées entre elles par des moyens d'assemblage 14, pour former un cadre fermé.

Dans ce mode de réalisation de la figure 5, la partie supérieure 10 en forme de portique est un profilé réalisé en un matériau composite et présentant conformément à l'invention, une structure monolithique d'une extrémité à l'autre. Le profilé constituant la partie supérieure 10 comprend une portion supérieure horizontale 10a dont les extrémités sont prolongées par deux portions coudées à angle droit 10b, orientées vers le bas, elles-mêmes prolongées par deux portions verticales 10c, parallèles entre elles et d'égales longueurs.

La section du profilé constituant la partie supérieure 10 en forme de portique est identique à la section du cadre C décrite précédemment en référence à la figure 2, dans le cas du premier mode de réalisation de l'invention, sauf aux extrémités inférieures des portions verticales 10c.

De même, la fabrication de la partie supérieure 10 en forme de portique du cadre de la figure 5 est identique à la fabrication du cadre C décrite précédemment en se référant aux figures 3 et 4, à propos du premier mode de réalisation de l'invention.

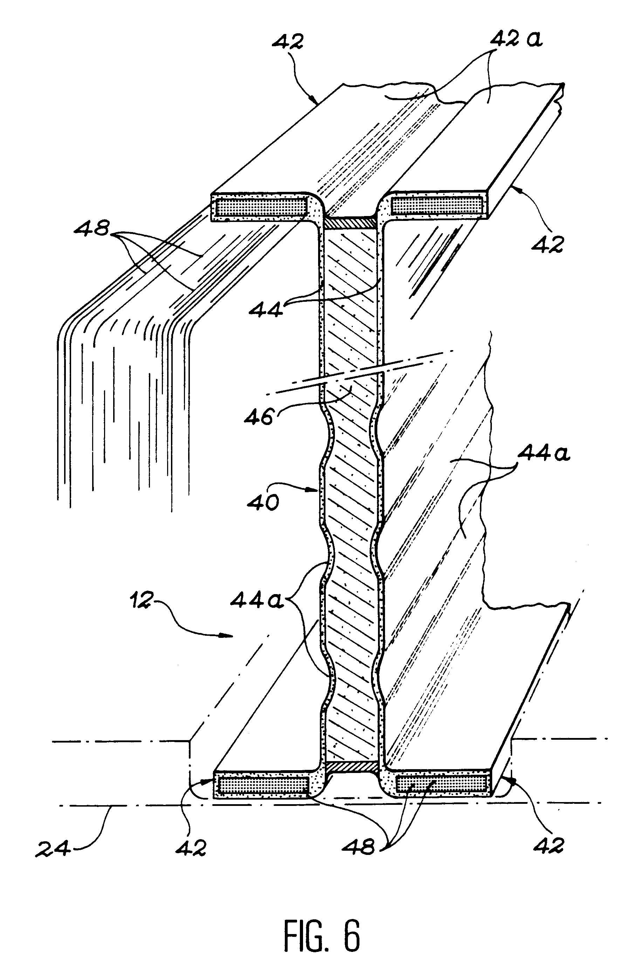

La structure de la partie inférieure 12 en forme de traverse va maintenant être décrite plus en détail en se référant à la figure 6, qui illustre une section verticale de cette partie 12.

La partie inférieure 12 en forme de traverse est constituée principalement d'un panneau 40, approximativement plan et vertical, qui s'étend entre les extrémités inférieures des portions verticales 10c de la partie supérieure 10 et dont l'épaisseur est voisine de la distance séparant les âmes 20 du profilé constituant cette partie 10. Comme le montre la figure 5, le panneau 40 a la forme d'un rectangle dont les deux angles inférieurs sont tronqués.

De façon plus précise, le panneau 40 présente une structure sandwich, c'est-à-dire qu'il est constitué de deux âmes minces parallèles et verticales 44 définissant entre elles un espace rempli d'un matériau déformable tel qu'une structure en nid d'abeilles ou une mousse 46 sur lequel elles adhèrent.

Le panneau 40 est bordé sur toute sa périphérie de deux demi-semelles latérales 42 orientées perpendiculairement au panneau 40, et prolongeant les âmes 44 en éloignement du plan de symétrie vertical du cadre. Les demi-semelles 42 sont délimitées extérieurement par des surfaces 42a orientées perpendiculairement à ce plan de symétrie et disposées dans le prolongement l'une de l'autre.

A la partie inférieure du panneau 40 comme à la partie supérieure de ce panneau, les demi-semelles 42 sont orientées parallèlement entre-elles selon une direction approximativement horizontale, de façon à constituer deux éléments parallèles rigides assurant une mise en charge du panneau 40 en compression, bien répartie en surface. On obtient ainsi la plus grande absorption d'énergie possible en cas d'accident.

De plus, à chaque extrémité du panneau 40 et dans la partie haute de ce dernier, les demi-semelles 42 sont orientées parallèlement entre elles et selon une direction approximativement verticale. Ces parties des demi-semelles 42 peuvent ainsi être placées dans le prolongement des demi-semelles extérieures 18 de la partie 10 du cadre, comme on le verra ultérieurement.

De préférence, les demi-semelles latérales 42 présentent une structure monolithique de forte section et elles sont constituées principalement de fibres unidirectionnelles 48 noyées dans une matrice de résine thermodurcissable. Les fibres 48 s'étendent sans discontinuité sur toute la circonférence du panneau 40, pour former un noyau dans chaque demi-semelle 42. Les âmes 44 sont raccordées aux demi-semelles 42 correspondantes et réalisées en tissus de fibres bidirectionnelles noyés dans une matrice de résine. Les remarques faites précédemment à propos des fibres et de la résine constituant le cadre C dans le mode de réalisation de la figure 1 et la partie supérieure 10 du cadre dans le mode de réalisation de la figure 5 s'appliquent également à la partie inférieure 12 du cadre dans ce dernier mode de réalisation.

Les demi-semelles latérales 42 situées aux extrémités et dans le bas du panneau 40 permettant la fixation par collage et par rivetage de la structure 24 formant la coque travaillante de l'aéronef, de la même manière que les demi-semelles 18 dans la partie supérieure 10 du cadre.

De préférence, les âmes 44 du panneau 40 présentent, dans la partie inférieure de ce dernier, des ondulations 44a orientées selon une direction longitudinale approximativement horizontale, entre les extrémités de la partie inférieure 12 en forme de traverse. Cette structure particulière permet d'obtenir par amorce de flambage une déformation contrôlée de la partie 12 du cadre si cette partie vient heurter brutalement le sol. En effet, l'énergie du choc est transmise par le bas de la partie 12 du cadre à l'âme déformable 40 sans que la résistance de cette dernière s'en trouve amoindrie lors du vol ou dans des conditions normales d'atterrissage.

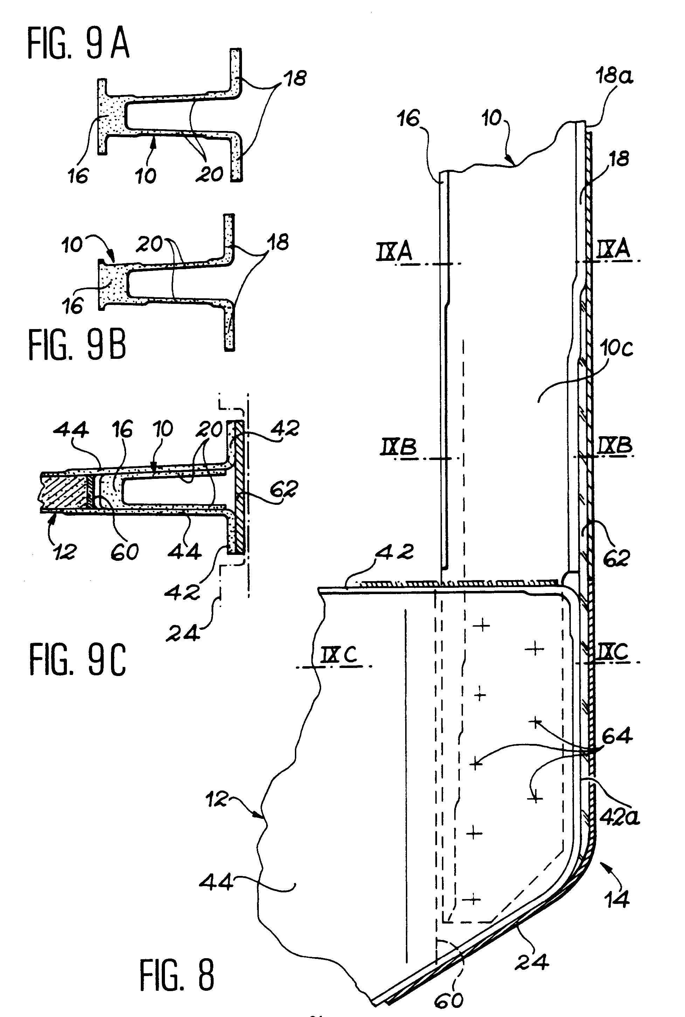

La partie inférieure 12 en forme de traverse est également fabriquée dans un moule, comme l'illustre très schématiquement la figure 7. Le principe général de la fabrication de cette partie 12 est le même que celui du cadre C (et de la partie 10) décrit précédemment en se référant à la figure 3, de sorte qu'il ne sera pas décrit de façon détaillée. Pour faciliter la compréhension, on indiquera simplement ici les principales étapes de fabrication ainsi que les différents éléments constituant le moule.

Le moule étant initialement ouvert, seule une forme 50 dont la face supérieure 50a est complémentaire de l'un des côtés du panneau 40 bordé par l'une des demi-semelles 32 est en place. Le bord périphérique de cette forme 50 est entouré par une vessie gonflable 52 initialement dégonflée. On réalise alors par drapage, selon la technique décrite en détail précédemment, l'âme 44 correspondant à ce côté du panneau 40, ainsi que la demi-semelle latérale 42. Pour faciliter la mise en place des fibres unidirectionnelles 48 constituant le noyau de cette dernière, les fibres 48 sont de préférence liées entre elles par un film support permettant de les draper à la manière d'un tissu. Etant donné que la semelle 42 est perpendiculaire au plan de symétrie du cadre, ce drapage peut être réalisé sans couture ni discontinuité, ce qui garantit le caractère monolithique des demi-semelles 42.

La structure alvéolaire ou la mousse 46 constituant la partie centrale du panneau 40 est ensuite mise en place, ainsi qu'une deuxième forme 54, éventuellement en plusieurs parties et dont la surface intérieure 54a est complémentaire de la surface périphérique extérieure de la partie 12 en forme de traverse. Une nouvelle opération de drapage est exécutée afin de réaliser la seconde âme 44 du panneau ainsi que la deuxième demi-semelle 42.

Enfin, une contre-forme 56, symétrique de la forme 50 et dont le bord périphérique est entouré d'une vessie gonflable 58 initialement dégonflée et identique à la vessie gonflable 52, est mise en place pour fermer le moule. Les vessies 52 et 58 sont ensuite gonflées et la polymérisation à chaud est effectuée selon les techniques classiques.

Il est à noter que les ondulations 44a formées dans les âmes 44 sont obtenues directement par moulage grâce à des déformations complémentaires formées dans la forme 50 et dans la contre-forme 56.

Après ouverture des moules des figures 3 et 7 les pièces 10 et 12 sont assemblées à l'aide des moyens d'assemblage 14, de la manière qui va maintenant être décrite en se référant aux figures 8 et 9.

Comme l'illustrent notamment la figure 8 et la figure 9C, à chacune des extrémités inférieures des portions verticales 10c de la partie 10 du cadre, les demi-semelles extérieures 18 ainsi que les parties en saillie de la semelle intérieure 16 sont totalement supprimées sur une certaine longueur. De plus, à chacune des extrémités longitudinales de la partie inférieure 12 du cadre, un évidement 60 ouvert vers l'extérieur est ménagé entre les âmes 44 du panneau. Les dimensions des évidements 60 sont telles que les extrémités dépourvues de semelles des portions verticales 10c y pénètrent en totalité. En particulier, la profondeur de chaque évidement 60 est légèrement supérieure à l'épaisseur des extrémités des portions 10c et les âmes 44 s'écartent progressivement du même angle que les âmes 20, de telle sorte que ces dernières viennent se loger pratiquement sans jeu dans les évidements 60.

Comme l'illustrent les sections représentées sur les figures 9A à 9C, la largeur des parties en saillie de la semelle intérieure 16 de la partie 10 du cadre diminue progressivement lorsqu'on se rapproche des extrémités inférieures de cette partie 10, pour disparaître totalement juste avant que ces extrémités ne pénètrent dans les évidements 60. De plus et comme on le voit sur la figure 8, l'épaisseur de ces parties en saillie de la semelle intérieure 16 est réduite dans les régions adjacentes à la partie inférieure 12.

Par ailleurs, les demi-semelles extérieures 18 de la partie 10 sont interrompues brutalement juste avant que les extrémités des portions 10c ne pénètrent dans les évidements 60 et ces demi-semelles 18 sont placées dans le prolongement des parties verticales des demi-semelles 42 de la partie inférieure 12, comme le montre clairement la figure 8. De plus, à proximité des extrémités dépourvues de semelles des portions 10c, les demi-semelles extérieures 18 comportent des parties en retrait qui se rapprochent progressivement de la semelle intérieure 16, de façon à permettre la mise en place d'une éclisse 62 dont la surface extérieure est située dans le prolongement des surfaces extérieures 18a des demi-semelles 18 et 42a des demi-semelles 42, sans discontinuité, comme l'illustre la figure 8. L'éclisse 62, elle-même en matériau composite, est fixée par exemple par des boulons (non représentés) d'une part sur les parties en retrait des demi-semelles 18 et d'autre part sur les parties des demi-semelles 42 situées aux extrémités de la partie inférieure 12. La continuité des demi-semelles extérieures du cadre, sur lesquelles est fixée la structure 24 de la coque travaillante, est ainsi assurée.

La fixation des extrémités de la partie 10 dans les extrémités de la partie 12 peut être complétée au moyen de boulons 64 traversant les âmes 20 et 44 de ces deux parties.

Afin notamment de supporter le plancher de l'aéronef, des poutres horizontales (non représentées) peuvent être fixées à la partie inférieure 12 en forme de traverse du cadre, par exemple au moyen de cornières réalisées elles aussi de préférence en matériau composite. La fixation de ces cornières sur le panneau 40 peut être faite par tout moyen approprié tel que des vis, des rivets ou par collage. Dans la partie inférieure du panneau comportant les ondulations 44a, cette fixation est faite uniquement par des rivets, de façon à éviter un effet de coin préjudiciable à un écrasement contrôlé de ce panneau lors d'un accident.

Bien entendu, les tissus bidirectionnels formant les âmes 20 et 44 peuvent être remplacés par des tissus multidirectionnels constitués de fils orientés selon trois ou quatre directions différentes.

## Revendications

1. Cadre pour coque travaillante, notamment pour fuselage d'aéronef, caractérisé par le fait qu'il a, au moins en partie, une structure monolithique constituée par un profilé en matériau composite formé de fibres à haute résistance mécanique agglomérées par une résine synthétique durcie et présentant en section une semelle intérieure (16) située, dans le plan du cadre, sur le côté intérieur du cadre, deux demi-semelles extérieures (18) situées, dans le plan du cadre, sur le côté extérieur du cadre, et deux âmes (20) reliant la semelle intérieure à chaque demi-semelle extérieure (18), la semelle intérieure (16) ainsi que les demi-semelles extérieures (18) étant constituées principalement de nappes de fibres unidirectionnelles (26) s'étendant longitudinalement sans discontinuité à l'intérieur du profilé, et les âmes du profilé étant formées par des tissus constitués de fibres multidirectionnelles (28) et reliant la semelle intérieure (26) à chaque demi-semelle extérieure (28).

2. Cadre selon la revendication 1, caractérisé par le fait que les deux âmes (20) qui relient la semelle intérieure (16) aux deux demi-semelles extérieures (18) forment entre elles un angle aigu ouvert entre les deux demi-semelles extérieures (18) et que la semelle intérieure (16) et les demi-semelles extérieures (18) sont perpendiculaires à un plan de symétrie du cadre contenant la bissectrice dudit angle aigu.

3. Cadre selon l'une quelconque des revendications 1 et 2, caractérisé par le fait qu'il a en totalité une structure monobloc monolithique.

4. Cadre selon l'une quelconque des revendications 1 et 2, caractérisé par le fait qu'il comprend une partie supérieure (10) en forme de portique présentant ladite structure monolithique et une partie inférieure (12) en forme de traverse dont les extrémités sont reliées par des moyens d'assemblage (14) aux extrémités de la partie supérieure (10).

5. Cadre selon la revendication 4, caractérisé par le fait que la partie inférieure (12) en forme de traverse comprend un panneau (40) bordé sur toute sa périphérie de deux demi-semelles latérales (42).

6. Cadre selon la revendication 5, caractérisé par le fait que les demi-semelles latérales (42) sont perpendiculaires à un plan de symétrie du cadre.

7. Cadre selon l'une quelconque des revendications 5 et 6, caractérisé par le fait que le panneau (40) comprend deux âmes (44) parallèles délimitant entre elles un espace rempli d'un matériau déformable (46).

8. Cadre selon la revendication 7, caractérisé par le fait que les demi-semelles latérales (42) sont situées dans le prolongement des âmes (44) du panneau (40) et contiennent principalement des fibres unidirectionnelles (48) s'étendant sans discontinuité sur toute la périphérie du panneau (40).

9. Cadre selon la revendication 8, caractérisé par le fait que des tissus de fibres multidirectionnelles prolongent chaque demi-semelle latérale (42) et forment les âmes (44) du panneau (40).

10. Cadre selon l'une quelconque des revendications 7 à 9, caractérisé par le fait que des ondulations (44a) sont formées dans des parties inférieures des âmes (44) du panneau (40), selon une direction longitudinale de la partie inférieure (12) en forme de traverse.

11. Cadre selon l'une quelconque des revendications 4 à 10, caractérisé par le fait que les extrémités de la partie supérieure (10) en forme de portique, sont dépourvues de semelle et fixées dans des évidements (60) formés dans les extrémités du panneau (40) et débouchant entre les demi-semelles latérales (42), de telle sorte que ces dernières soient situées dans le prolongement des demi-semelles extérieures (18) de la partie supérieure (10) en forme de portique.

12. Cadre selon la revendication 11, caractérisé par le fait que la semelle intérieure (16) de la partie supérieure (10) en forme de portique comprend des ailes en saillie dont la largeur diminue progressivement à proximité des extrémités dépourvues de semelles de cette partie supérieure.

13. Cadre selon l'une quelconque des revendications 11 et 12, caractérisé par le fait les demi-semelles extérieures (18) comportent des parties en retrait se rapprochant progressivement de la semelle intérieure (16), à proximité des extrémités dépourvues de semelles de la partie supérieure (10) en forme de portique, des éclisses (62) étant fixées sur ces parties en retrait des demi-semelles extérieures (18) et sur des parties adjacentes des demi-semelles latérales (42).

14. Procédé de fabrication d'un cadre pour coque travaillante, notamment pour fuselage d'aéronef, caractérisé par le fait qu'on réalise au moins en partie le cadre sous forme d'une structure monolithique, par :
- drapage de tissus unidirectionnels (26) et multidirectionnels (28) imprégnés de résine, sur une forme (30) délimitant la plus grande partie du contour, vers l'extérieur du cadre, d'un profilé présentant en section une semelle intérieure (16) située, dans le plan du cadre, sur le côté intérieur du cadre,, deux demi-semelles extérieures (18) situées, dans le plan du cadre, sur le côté extérieur du cadre, et deux âmes (20) reliant la semelle intérieure à chaque demi-semelle extérieure, ces âmes formant entre elles un angle aigu ouvert entre les demi-semelles extérieures (18), les tissus unidirectionnels (26) formant la semelle intérieure (16) et les demi-semelles extérieures (18) et les tissus multidirectionnels (28) reliant la semelle intérieure à chaque demi-semelle extérieure et formant les âmes (20) du profilé ;
- fermeture d'un moule comportant ladite forme (30), des vessies gonflables (32, 34) et une contre-forme (38) ;
- gonflage des vessies (32, 34) afin de compacter les tissus et polymérisation à la chaleur de la résine imprégnant les tissus (26, 28) ;
- démoulage de ladite structure monolithique.

15. Procédé selon la revendication 14, caractérisé par le fait qu'on place une vessie gonflable (32) sur une partie centrale de la forme (30) correspondant à la semelle intérieure (16), avant le drapage des tissus (26, 28), et par le fait qu'on place deux vessies gonflabes à armature (34) sur chaque demi-semelle extérieure (18) et contre chaque âme (20) du profilé, après le drapage des tissus (26, 28).

16. Procédé selon l'une quelconque des revendications 14 et 15, caractérisé par le fait qu'au cours du drapage des tissus multidirectionnels (28) dans des portions incurvées (10b) du profilé, on pratique des entailles (29b) dans des bords (28b) des tissus repliés vers les demi-semelles extérieures (18) et on enlève des suppléments de tissus correspondant à ces entailles (29b), et on pratique des entailles divergentes (29a) dans des bords (28a) des tissus repliés vers la semelle intérieure (16), en décalant ces entailles (29a, 29b) entre les tissus (28) adjacents.

17. Procédé selon l'une quelconque des revendications 14 à 16, caractérisé par le fait qu'on réalise en totalité le cadre sous forme d'une structure monobloc monolithique.

18. Procédé selon l'une quelconque des revendications 14 à 16, caractérisé par le fait qu'on réalise une partie supérieure (10) en forme de portique du cadre sous forme d'une structure monolithique et par le fait qu'on réalise séparément une partie inférieure (12) en forme de traverse du cadre, par :
- drapage de tissus unidirectionnels (48) et multidirectionnels imprégnés de résine sur une forme (50) complémentaire de l'un des côtés de ladite partie inférieure (12) en forme de traverse, pour former une âme (44) d'un panneau (40) et une demi-semelle latérale (42) prolongeant l'âme (44), les tissus unidirectionnels formant la demi-semelle latérale et les tissus multidirectionnels formant l'âme (44) du panneau ;
- mise en place sur l'âme du panneau d'un matériau déformable (46) constituant la partie centrale du panneau (40) et autour du matériau (46), d'une forme périphérique (54) ;
- drapage de tissus unidirectionnels (48) et multidirectionnels imprégnés de résine, respectivement sur le matériau déformable (46) et sur la forme périphérique (54), pour former une deuxième âme (44) du panneau (40) et une deuxième demi-semelle latérale (42) prolongeant la deuxième âme ;
- fermeture d'un moule comportant lesdites formes (50, 54) des vessies gonflables (52, 58) et une contreforme (56) ;
- gonflage des vessies (52, 58) afin de compacter les tissus et polymérisation à chaud de la résine imprégnant ces derniers ;
- démoulage de la partie inférieure (12) en forme de traverse.

19. Procédé selon la revendication 18, caractérisé par le fait qu'on place une première vessie gonflable (52) sur la périphérie de la forme (50), avant le drapage des tissus sur cette forme, et une deuxième vessie gonflable (58) sur la contreforme (56), avant la fermeture du moule.

20. Procédé selon l'une quelconque des revendications 18 et 19, caractérisé par le fait que la forme (50) et la contreforme (56) comportent des ondulations s'étendant selon une direction longitudinale de la partie inférieure (12) en forme de traverse, au niveau des parties inférieures des âmes parallèles (44).

21. Procédé selon l'une quelconque des revendications 18 à 20, caractérisé par le fait qu'on assemble la partie supérieure (10) en forme de portique et la partie inférieure (12) en forme de poutre en introduisant des extrémités dépourvues de semelles de la partie supérieure (10) en forme de portique dans des évidements (60) formés dans des extrémités de la partie inférieure (12) en forme de poutre, entre les âmes parallèles (44), et en fixant ces extrémités les unes aux autres.

## Claims

1. Frame for a working hull, especially for the fuselage of an aircraft, characterized in that it has in part at least a monolithic structure constituted by a profile made of a composite material formed of fibres with high mechanical resistance, said fibres being agglomerated by a hardened synthetic resin and having as a section an internal flange (16) located in the plane of and on the inside of the frame two external half-flanges (18) located in the plane of and on the outside of the frame and two webs (20) connecting the internal flange to each external half-flange (18), the internal flange (16) and the external half-flanges (18) mainly being constituted by laps of unidirectional fibres (26) extending longitudinally without discontinuity inside the profile, and the webs of the profile being formed by fabrics made up of multidirectional fibres (28) and connecting the internal flange (26) to each external half-flange (28).

2. Frame according to claim 1, characterized in that the two webs (20) which connect the internal flange (16) to the two external half-flanges (18) form between them an acute angle open between the two external half-flanges (18) and in that the internal flange (16) and the external half-flanges (18) are perpendicular to a plane of symmetry of the frame containing the bisectrix of said acute angle.

3. Frame according to either of the claims 1 and 2, characterized in that it wholly has a monolithic monobloc structure.

4. Frame according to either of the claims 1 and 2, characterized in that it includes an upper portico-shaped part (10) presenting said monolithic structure and a lower crosspiece-shaped part (12) whose extremities are connected by assembling means (14) to the extremities of the upper part (10).

5. Frame according to claim 4, characterized in that the lower crosspiece-shaped part (12) includes a panel (40) bordered over its entire periphery with two lateral half-flanges (42).

6. Frame according to claim 5, characterized in that the lateral half-flanges (42) are perpendicular to a plane of symmetry of the frame.

7. Frame according to either of the claims 5 and 6, characterized in that the panel (40) includes two parallel webs (44) delimiting between them a space filled with a ductile material (46).

8. Frame according to claim 7, characterized in that the lateral half-flanges (42) are located inside the extension of the webs (44) of the panel (40) and mainly contain unidirectional fibres (48) extending without discontinuity over the entire periphery of the panel (40).

9. Frame according to claim 8, characterized in that fabrics of multidirectional fibres prolong each lateral half-flange (42) and form the webs (44) of the panel (40).

10. Frame according to any one of the claims 7 to 9, characterized in that undulations (44a) are formed in the lower parts of the webs (44) of the panel (40) along a longitudinal direction of the lower crosspiece-shaped part (12).

11. Frame according to any one of the claims 4 to 10, characterized in that the extremities of the upper portico-shaped part (10) are deprived of the flange and are fixed in the recesses (60) formed in the extremities of the panel (40) and open between the lateral half-flanges (42) so that the latter are located in the elongation of the external half-flanges (18) of the upper portico-shaped part (10).

12. Frame according to claim 11, characterized in that the internal flange (16) of the upper portico-shaped part (10) includes projecting wings whose width progressively reduces close to the extremities deprived of the flanges of this upper part.

13. Frame according to either of the claims 11 and 12, characterized in that the external half-flanges (18) comprise standing back parts progressively drawing nearer to the internal flange (16) close to the extremities deprived of the flanges of the upper portico-shaped part (10), fishplates (62) being secured to these standing back parts of the external half-flanges (18) and to adjacent parts of the lateral half-flanges (42).

14. Method for producing a frame for a working hull, especially for the fuselage of an aircraft, wherein at least part of the frame is embodied in the form of a monolithic structure by:
- the draping of unidirectional and multidirectional fabrics (26) impregnated with resin on a form (30) delimiting the largest part of the contour towards the outside of the frame a profile having as a section one internal flange (16) located in the plane of and on the inside of the frame, two external half-flanges (18) located in the plane of and on the outside of the frame and two webs (20) connecting the internal flange to each external half-flange, these webs forming between them an acute angle open between the external half-flanges (18), the unidirectional fabrics (26) forming the internal flange (16) and the external half-flanges (18) and the multidirectional fabrics (28) connecting the internal flange to each external half-flange and forming the webs (20) of the profile;
- the closing of a mould comprising said form (30), inflatable bladders (32, 34) and a counter-form (38);
- the inflating of the bladders (32, 34) so as to compress the fabrics and heat-polymerize the resin impregnating the fabrics (26, 28);
- the removing of said monolithic structure from the mould.

15. Method according to claim 14, characterized in that an inflatable bladder (32) is placed on a central part of the form (30) corresponding to the internal flange (16) before draping of the fabrics (26, 28) and wherein two inflatable armature bladders (34) are placed on each external half-flange (18) and against each web (20) of the profile after draping of the fabrics (26, 28);

16. Method according to either of the claims 14 and 15, characterized in that at the time of draping of the multidirectional fabrics (28) in the curved portions (10b) of the profile, notches (29b) are made in the edges (28b) of the fabrics folded towards the external half-flanges (18) and any excess fabric corresponding to these notches (29b) are removed, and divergent notches (29b) are made in the edges (28a) of the fabrics folded towards the internal flange (16) by offsetting these notches (29a, 29b) between the adjacent fabrics (28).

17. Method according to any one of the claims 14 to 16, characterized in that the frame is fully embodied in the form of a monolithic monobloc structure.

18. Method according to any one of the claims 14 to 16, characterized in that one upper portico-shaped part (10) is embodied in the form of a monolithic structure and a lower crosspiece-shaped part (12) of the frame is embodied separately by:
- the draping of unidirectional and multidirectional fabrics (48) impregnated with resin on a form (50) complementary to one of the sides of said lower crosspiece-shaped part (12) so as to form a web (44) of a panel (40) and a lateral half-flange (42) extending the web (44), the unidirectional fabrics forming the lateral half-flange and the multidirectional fabrics forming the web (44) of the panel;
- the placing on the web of the panel a ductile material (46) constituting the central part of the panel (40) and a peripheral form around the material (46);
- the respective draping of unidirectional and multidirectional fabrics (48) impregnated with resin on the ductile material (46) and on the peripheral form (54) so as to form a second web (44) of the panel (40) and a second lateral half-flange (42) extending the second web;
- the closing of a mould comprising said forms (50, 54) of the inflatable bladders (52, 58) and a counter-form (56);
- the inflation of the bladders (52, 58) so as to compress the fabrics and heat-polmerizing the resin impregnating the latter;
- removal of the lower crosspiece-shaped part (12) from the mould.

19. Method according to claim 18, characterized in that a first inflatable bladder (52) is placed on the periphery of the form (50) before draping the fabrics on this form, a second inflatable bladder (58) being placed on the counter-form (56) before the mould is closed.

20. Method according to either of the claims 18 and 19, characterized in that the form (50) and the counter-form (56) comprise undulations extending along a longitudinal direction of the lower crosspiece-shaped part (12) to the level of the lower parts of the parallel webs.

21. Method according to any one of the claims 18 to 20, characterized in that the upper portico-shaped part (10) and the lower beam-shaped part (12) are assembled by introducing the extremities deprived of the flanges of the upper portico-shaped part (10) in the recesses (60) formed in the extremities of the lower beam-shaped part (12) between the parallel webs (44) and by fixing these extremities opposite each other.

## Patentansprüche

1. Rahmen für einen selbsttragenden Rumpf, vor allem für einen Rumpf eines Luftfahrzeugs,
dadurch **gekennzeichnet,**
daß er zumindest teilweise von monolithischer Struktur ist, bestehend aus einem Profil aus Kompositmaterial, gebildet aus Fasern von hoher mechanischer Festigkeit gebunden durch ein ausgehärtetes Kunstharz, und dessen Querschnitt sich präsentiert mit einer Innensohle (16), im Seitenriß des Rahmens auf der Innenseite des Rahmens befindlich, zwei Außen-Halbsohlen (18), im Seitenriß des Rahmens auf der Außenseite des Rahmens befindlich, und zwei Stegen (20), welche die Innensohle mit jeder der Außen-Halbsohlen (18) verbinden, wobei die Innensohle (16) ebenso wie die Außen-Halbsohlen (18) hauptsächlich aus einem Vlies mit einer Faserrichtung (26) bestehen, das sich im Innern des Profils in Längsrichtung ohne Diskontinuität erstreckt und die Profilstege aus Geweben gebildet werden die mehrere Faserrichtungen (28) aufweisen und die Innensohle (26) mit jeder Außen-Halbsohle (18) verbinden.

2. Rahmen nach Anspruch 1, dadurch gekennzeichnet, daß die beiden Stege (20), die die Innensohle (16) mit den beiden Außen-Halbsohlen (18) verbinden, miteinander einen spitzen Winkel bilden, offen zwischen den beiden Außen-Halbsohlen (18) und daß die Innensohle (16) und die Außen-Halbsohlen (18) rechtwinklig sind zu einer Symetrieebene durch die Winkelhalbierende des genannten spitzen Winkels.

3. Rahmen nach irgendeinem der Ansprüche 1 und 2, dadurch gekennzeichnet, daß es sich um eine vollkommen monolithische Struktur aus einem Stück handelt.

4. Rahmen nach Anspruch 1 und 2, dadurch gekennzeichnet, daß er einen oberen portalförmigen Teil (10) enthält, der die genannte monolithische Struktur zeigt und einen unteren traversenförmigen Teil (12), dessen Enden über Verbindungsmittel (14) mit den Enden des oberen Teils (10) verbunden sind.

5. Rahmen nach Anspruch 4, dadurch gekennzeichnet, daß der untere traversenförmige Teil (12) eine Platte (40) enthält, die auf ihrem ganzen Umfang umrandet ist von den beiden seitlichen Halbsohlen (42).

6. Rahmen nach Anspruch 5, dadurch gekennzeichnet, daß die seitlichen Halbsohlen (42) senkrecht sind zu einer Symetrieebene des Rahmens.

7. Rahmen nach irgendeinem der Ansprüche 5 und 6, dadurch gekennzeichnet, daß die Platte (40) zwei Stege (44) enthält, die einen Raum abgrenzen, der mit einem deformierbaren Material (46) gefüllt ist.

8. Rahmen nach Anspruch 7, dadurch gekennzeichnet, daß die beiden Seiten-Halbsohlen (42) sich in der Verlängerung der Stege (44) der Platte (40) befinden und hauptsächlich in eine Richtung weisende Fasern enthalten (48), die sich ohne Diskontinuität über die ganze Peripherie der Platte (40) erstrecken.

9. Rahmen nach Anspruch 8, dadurch gekennzeichnet, daß Gewebe aus in mehrere Richtungen weisenden Fasern jede Seiten-Halbsohle (42) verlängern und die Stege (44) der Platte (40) bilden.

10. Rahmen nach irgendeinem der Ansprüche 7 bis 9, dadurch gekennzeichnet, daß der untere Teil der Stege (44) der Platte (40) Wellungen aufweist in Längsrichtung des traversenförmigen unteren Teils (12).

11. Rahmen nach irgendeinem der Ansprüche 4 bis 10, dadurch gekennzeichnet, daß die Enden des portalförmigen oberen Teils (10) keine Sohlen haben und befestigt sind in den Aussparungen (60), die in den Enden der Platte (40) enthalten sind und eine Öffnung schaffen zwischen den Seiten-Halbsohlen (42) , derart daß letztere sich in der Verlängerung der Außen-Halbsohlen (18) des oberen portalförmigen Teils (10) befinden.

12. Rahmen nach Anspruch 11, dadurch gekennzeichnet, daß die Innensohle (16) des oberen portalförmigen Teils (10) ausladende Flügel enthält, deren Breite progressiv abnimmt in der Nähe der sohlenlosen Enden dieses oberen Teils.

13. Rahmen nach irgendeinem der Ansprüche 11 und 12, dadurch gekennzeichnet, daß die Außen-Halbsohlen (18) zurückweichende Teilstücke enthalten bei progressiver Annäherunng an die Innensohle (16) in der Nähe der sohlenlosen Enden des portalförmigen oberen Teils (10), wobei auf diesen zurückweichenden Teilen der Außen-Halbsohlen (18) Laschen (62) befestigt sind und auf den angrenzenden Teilen der Seiten-Halbsohlen (42).

14. Herstellungsverfahren eines Rahmens für einen selbsttragenden Rumpf, vor allem für einen Rumpf eines Luftfahrzeugs, dadurch gekennzeichnet, daß man zumindest einen Teil des Rahmens in der Form einer monolithischen Struktur herstellt mittels:
- Drapieren der mit Kunstharz imprägnierten Gewebe mit einer Faserrichtung (26) und mehreren Faserrichtungen (28) auf eine Form (30), die den größten Teil der nach außen gerichteten Kontur eines Rahmenprofils abgrenzt, dessen Querschnitt sich präsentiert mit einer Innensohle (16), im Seitenriß des Rahmens auf der Innenseite des Rahmens befindlich, zwei äußeren Halbsohlen (18), im Seitenriß des Rahmens auf der Außenseite des Rahmens befindlich, und zwei Stegen (20), welche die Innensohle mit jeder der Außen-Halbsohlen (18) verbinden, wobei diese Stege miteinander einen spitzen Winkel bilden, offen zwischen den beiden Außen-Halbsohlen (18) , wobei die Gewebe mit einer Faserrichtung (26) die Innensohle (16) bilden und die Außen-Halbsohlen (18) , und die Gewebe mit mehreren Faserrichtungen (28) die Innensohle (16) mit jeder Außen-Halbsohlen (18) verbinden und die Stege (20) des Profils bilden;
- Schließen einer Preßform, welche die genannte Form (30) enthält, sowie aufblasbare Bälge (32, 34) und eine Gegenform (38);
- Aufblasen der Bälge (32, 34) um die Gewebe zu verdichten und Wärmepolymerisation des die Gewebe (26, 28) imprägnierenden Kunstharzes;
- Ausformen der genannten monolithischen Struktur.

15. Rahmen nach Anspruch 14, dadurch gekennzeichnet, daß man einen aufblasbaren Balg (32) in einem der Innensohle (16) verbundenen zentralen Teil der Form (30) anbringt vor der Drapierung der Gewebe (26, 28), und dadurch gekennzeichnet, daß man zwei armierte aufblasbare Bälge (34) auf jeder Außen-Halbsohlen (18) und an jedem Steg (20) des Profils anbringt nach der Drapierung der Gewebe (26, 28).

16. Rahmen nach irgendeinem der Ansprüche 14 und 15, dadurch gekennzeichnet, daß während des Drapierens der Gewebe mit mehreren Faserrichtungen (28) in die gerundeten Teile (10b) des Profils man Einschnitte (29b) anbringt in den Rändern (28b) des gegen die Außen-Halbsohlen (18) gebogenen Gewebes und das diesen Einschnitten entsprechende Material herausnimmt und man divergierende Einschnitte (29a) anbringt in den Rändern (28a) der zur Innensohlen (16) hin gebogenen Gewebe, wobei man diese Einschnitte (29a, 29b) zwischen den angrenzenden Geweben verschiebt.

17. Rahmen nach irgendeinem der Ansprüche 14 bis 16, dadurch gekennzeichnet, daß man den ganzen Rahmen in der Form einer monolithische Struktur aus einem Stück herstellt.

18. Rahmen nach irgendeinem der Ansprüche 14 bis 16, dadurch gekennzeichnet, daß man einen oberen portalförmigen Teil (10) des Rahmens herstellt in der Form einer monolithischen Struktur und dadurch, daß man separat einen unteren traversenförmigen Teil (12) des Rahmens herstellt, mittels:
- Drapieren der mit Harz imprägnierten Gewebe mit einer Faserrichtung (48) und mehreren Faserrichtungen auf eine Form (50), die einer der Seiten des genannten unteren traversenförmigen Teils (12) komplementär ist , um einen Steg (44) einer Platte (40) zu bilden und eine den Steg (44) verlängernde Seiten-Halbsohlen (42), wobei die Gewebe mit mehreren Faserrichtungen den Steg (44) der Platte bilden;
- Anbringen eines den zentralen Teil der Platte bildenden deformierbaren Materials (46) auf dem Steg der Platte und einer peripheren Form (54) um dieses Material (46) herum;
- Drapieren der harzimprägnierten Gewebe mit einer Faserrichtung (48) und mehreren Faserrichtungen jeweils auf das deformierbare Material (46) und auf die periphere Form (54), um einen zweiten Steg (44) der Platte (40) zu bilden und eine zweite den zweiten Steg verlängernde Seiten-Halbsohle (42);
- Schließen einer Preßform, welche die genannten Formen (50, 54), aufblasbare Bälge (52, 58) und eine Gegenform (56) enthält;
- Aufblasen der Bälge (52, 58), um die Gewebe zu verdichten und Wärmepolymerisation des letztere imprägnierenden Harzes;
- Ausformen des unteren traversenförmigen Teils (12).

19. Rahmen nach Anspruch 18, dadurch gekennzeichnet, daß man einen ersten aufblasbaren Balg (52) auf der Peripherie der Form (50) anbringt vor der Drapierung des Gewebes auf diese Form, und einen zweiten aufblasbaren Balg (58) auf der Gegenform, vor dem Schließen der Preßform.

20. Rahmen nach irgeneinem der Ansprüche 18 und 19, dadurch gekennzeichnet, daß die Form (50) und die Gegenform (56) Wellungen aufweisen, die sich in Längsrichtung des unteren traversenförmigen Teils (12) auf der Ebene der unteren Teile der parallelen Stege (44) erstrecken.

21. Rahmen nach irgendeinem der Ansprüche 18 bis 20, dadurch gekennzeichnet, daß man den portalförmigen oberen Teil (10) und den trägerförmigen unteren Teil (12) zusammenfügt, indem man die sohlenlosen Enden des portalförmigen oberen Teils (10) einführt in Aussparungen (60), die enthalten sind in den Enden des trägerförmigen unteren Teils (12) zwischen den parallen Stegen (44), und indem man diese aneinander befestigt.
